# EUROPEAN PATENT APPLICATION

(11) **EP 2 521 299 A1**
(43) Date of publication of application: **07.11.2012**
(21) Application number: 10840566.3
(22) Date of filing: 28.12.2010
(51) Int. Cl.: H04L 1/18

(54) **DATA TRANSMISSION METHOD AND NETWORK SIDE DEVICE**

(30) Priority: 28.12.2009 CN 200910244073
(71) Applicant: Huawei Technologies Co., Ltd., Shenzhen, Guangdong 518129 (CN)
(72) Inventor: OU, Yanhua, Shenzhen Guangdong 518129 (CN); WU, Lihua, Shenzhen Guangdong 518129 (CN)
(74) Representative: Haley, Stephen
(86) International application number: PCT/CN2010/080366
(87) International publication number: WO 2011/079777

(57) **Abstract**

The present invention provides a data transmission method and a network side device. The method includes: establishing a mapping relation between a first identifier of data required to be sent in a first retransmission request process and a second identifier of the data in a second retransmission request process, where the first retransmission request process and the second retransmission request process are located at different layers for performing transmission processing on the data, and a layer where the first retransmission request process is located is higher than a layer where the second retransmission request process is located; and sending the data, where in the second retransmission request process updates, according to the mapping relation and a sending status of the data, sending status information of the data in the first retransmission request process, so that in the first retransmission request process, whether to retransmit the data is determined according to the sending status information of the data. Through the present invention, sharing of the sending status information of the same data between two levels of retransmission request processes is implemented at a sending end, so as to improve the utilization ratio of frequency spectrum resources during a reliable data transmission process.

## Description

This application claims priority to Chinese Patent Application No. 200910244073.4, filed with the Chinese Patent Office on December 28, 2009, and entitled "DATA TRANSMISSION METHOD AND NETWORK SIDE DEVICE", which is incorporated herein by reference in its entirety.

### FIELD OF THE INVENTION

The present invention relates to the field of communications technologies, and in particular, to a data transmission method and a network side device.

### BACKGROUND OF THE INVENTION

Automatic repeat request (Automatic Repeat Request, ARQ for short) and hybrid automatic repeat request (Hybrid ARQ, HARQ for short) are effective means to improve the reliability of data transmission. The ARQ has a time diversity gain. A sending end sends a data frame, and if a receiving end finds that the frame is faulty, the receiving end will notify the sending end of re-sending, and in this case, the sending end re-sends data which is the same as the previous frame. Usually, the receiving end will discard the faulty frame and wait for receiving the re-sent data. The HARQ has a combination gain and a time diversity gain. If a receiving end receives a faulty frame which cannot be repaired, the receiving end will notify a sending end of retransmitting the frame. However, the receiving end will not discard the faulty frame, but will save the faulty frame, and wait for combining the faulty frame with a frame re-sent by the sending end according to a certain policy and then decode the combined frame. Through combination of useful information in the faulty frame with information of the retransmitted frame, the HARQ obtains a maximum efficiency, and in comparison with the ARQ, the timeliness and reliability of feedback is much higher. However, due to a channel change or a problem that a channel adaptive algorithm does not match a channel, it may be caused that even after HARQ retransmission, the receiving end still fails to receive the data rightly. Therefore, after an HARQ operation, a certain error rate will remain, and the error rate causes harmful effects on normal operation of an upper protocol (such as TCP).

In order to obtain a better performance of reliable data transmission, in a third generation partnership program (Generation Partnership Program, 3GPP for short) system, the ARQ is combined with the HARQ, the ARQ supplements HARQ transmission for its shortage, and the two jointly guarantee the reliability of data transmission in a radio link. In the prior art, the ARQ and the HARQ cooperate to perform serial retransmission of same data. For example, ordering is performed in both HARQ and ARQ, when data retransmission is required, HARQ data retransmission is performed firstly and after the HARQ retransmission fails, the ARQ retransmits the data based on feedback information (such as, an NACK message) of the receiving end. Alternatively, in the prior art, the ARQ and the HARQ cooperate to perform parallel retransmission of the same data. For example, ordering is performed in HARQ and is not performed in ARQ, the ARQ retransmission is performed in parallel with the ARQ retransmission, or the ARQ data retransmission is performed based on timeout retransmission instead of an NACK message of the receiving end.

In the implementation of the prior art, the inventor finds that if a manner that enabling both the HARQ ordering and the ARQ ordering is adopted, the serial retransmission can be performed for the same data, but because the ARQ retransmission relays on feedback information of the receiving end, a long delay is introduced; and if a manner that parallel retransmission in the HARQ and ARQ is adopted, a high retransmission bandwidth overhead will be caused, which reduces the utilization ratio of frequency spectrum resources.

### SUMMARY OF THE INVENTION

The present invention provides a data transmission method and a network side device, for improving the utilization ratio of frequency spectrum resources in a reliable data transmission process.

An embodiment of the present invention provides a data transmission method, including:
establishing a mapping relation between a first identifier of data required to be sent in a first retransmission request process and a second identifier of the data in a second retransmission request process, where the first retransmission request process and the second retransmission request process are located at different layers for performing transmission processing on the data, and a layer where the first retransmission request process is located is higher than a layer where the second retransmission request process is located; and
sending the data, where the second retransmission request process updates, according to the mapping relation and a sending status of the data, sending status information of the data in the first retransmission request process, so that in the first retransmission request process, whether to retransmit the data is determined according to the sending status information of the data.

An embodiment of the present invention further provides a network side device, including:
a mapping module, configured to establish a mapping relation between a first identifier of data required to be sent in a first retransmission request process and a second identifier of the data in a second retransmission request process, where the first retransmission request process and the second retransmission request process are located at different layers for performing transmission processing on the data, and a layer where the first retransmission request process is located is higher than a layer where the second retransmission request process is located; and
a sending status updating module, configured to send the data, where the second retransmission request process updates, according to the mapping relation and a sending status of the data, sending status information of the data in the first retransmission request process, so that in the first retransmission request process, whether to retransmit the data is determined according to the sending status information of the data.

In the embodiments of the present invention, when the network side device is used as the sending end, sharing of the sending status information of the same data between the first retransmission request process and the second retransmission request process is implemented, and in the first retransmission request process located at the higher layer, a retransmission mechanism needs to be determined according to the sending status of the data in the second retransmission request process located at the lower layer, which thereby reduces the dependence on the feedback information during a process of determining the retransmission mechanism in the first retransmission request process, and further reduces the resource waste caused by parallel retransmission in a two-level retransmission request process, so as to improve the utilization ratio of frequency spectrum resources during a reliable data transmission process.

### BRIEF DESCRIPTION OF THE DRAWINGS

To illustrate the technical solutions according to the embodiments of the present invention or in the prior art more clearly, accompanying drawings to be used for describing the embodiments or the prior art are introduced briefly in the following. Apparently, the accompanying drawings in the following description are only some embodiments of the present invention, and persons of ordinary skill in the art can derive other drawings from these accompanying drawings without creative efforts.

FIG. 1 is a flow chart of a data transmission method according to a first embodiment of the present invention;

FIG. 2 is a flow chart of a data transmission method according to a second embodiment of the present invention;

FIG. 3 is a flow chart of a data transmission method according to a third embodiment of the present invention; and

FIG. 4 is a schematic structural diagram of a network side device according to a fourth embodiment of the present invention.

### DETAILED DESCRIPTION OF THE EMBODIMENTS

The technical solutions according to the embodiments of the present invention are clearly and completely described in the following with reference to the accompanying drawings according to the embodiments of the present invention. It is obvious that the embodiments to be described are only part rather than all of the embodiments of the present invention. All other embodiments obtained by persons skilled in the art based on the embodiments of the present invention without creative efforts fall within the protection scope of the present invention.

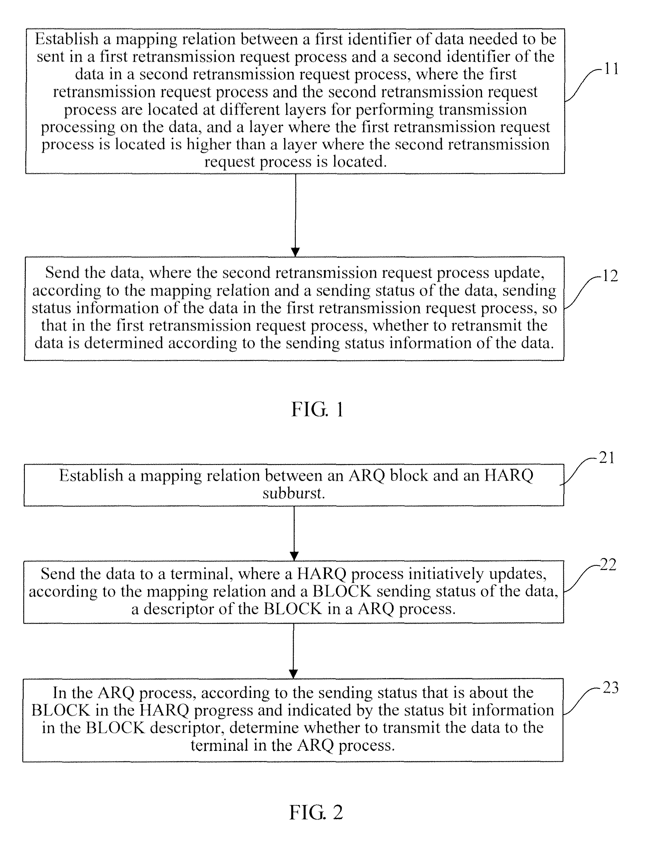

FIG. 1 is a flow chart of a data transmission method according to a first embodiment of the present invention. As shown in FIG. 1, the data transmission method according to the embodiment includes:

Step 11: Establish a mapping relation between a first identifier of data required to be sent in a first retransmission request process and a second identifier of the data in a second retransmission request process, where the first retransmission request process and the second retransmission request process are located at different layers for performing transmission processing on the data, and a layer where the first retransmission request process is located is higher than a layer where the second retransmission request process is located.

When a network side device, as a sending end, sends data to a receiving end such as a terminal, multilayer encapsulation of the data is required. According to the difference of actually applied communication protocols, models of hierarchical data processing may also be different. The first retransmission request process and the second retransmission request process are located at different layers for performing transmission processing on the data, and the layer where the first retransmission request process is located is higher than the layer where the second retransmission request process is located. In this step, the mapping relation between the identifiers used when packetizing processing is performed on the same data at the layer where the first retransmission request process is located and at the layer where the second retransmission request process is located is established, so that the second retransmission request process locates sending status information of the same data in the first retransmission request process according to the mapping relation. The sending status information includes status information such as first sending or retransmission.

Step 12: Send the data, where the second retransmission request process updates, according to the mapping relation and a sending status of the data, the sending status information of the data in the first retransmission request process, so that in the first retransmission request process whether to retransmit the data is determined according to the sending status information of the data.

After the network side device performs packetizing processing on the data at each layer, the data that undergoes final packetizing processing is sent to the terminal. The second retransmission request process starts monitoring of the sending status of the data and updates, according to the mapping relation and the sending status of the data, the sending status information of the data in the first retransmission request process. The sending status information includes status information of first transmission or retransmission.

Optionally, the sending status information of the data in the first retransmission request process includes: a first status, a second status or a third status. The first status indicates that the data is being processed in the second retransmission request process, the second status indicates that the data is successfully sent in the second retransmission request process, and the third status indicates that in the second retransmission request process, the maximum number of retransmission times is reached and the retransmission of the data is given up, or that an abnormality occurs and the retransmission of the data is given up.

Whether it is required to retransmit the data in the first retransmission request process is determined according to the sending status information of the data in the first retransmission request process. If the sending status information of the data in the first retransmission request process is the first status or the second status, no matter whether an ARQ NACK message fed back by the terminal is received in the first retransmission request process, the data is not retransmitted to the terminal. If the sending status information of the data in the first retransmission request process is the third status, in this case, no matter whether the ARQ NACK information is received in an ARQ, the operation of retransmitting the data to the terminal is immediately triggered.

In the data transmission method in this embodiment, the sharing of the sending status information of the same data between the first retransmission request process and the second retransmission request process is implemented at the sending end, and in the first retransmission request process located at the higher layer, a retransmission mechanism needs to be determined according to the sending status of the data in the second retransmission request process located at the lower layer, which reduces the dependence on feedback information during a process in which the retransmission mechanism is determined in the first retransmission request process, and avoids the resource waste caused by parallel retransmission in a two-level retransmission request process, so as to improve the utilization ratio of frequency spectrum resources during a reliable data transmission process and improve the reliability and validity of the data transmission.

The technical solution in the embodiment of the present invention may be applied in a technology having both the ARQ and the HARQ modes, and may also be applied in a cross-layer design, for example, a mechanism of two-level or multi-level retransmission and feedback between the HARQ and a TCP agent, the ARQ and the TCP agent, or the HARQ&ARQ and the TCP agent, so as to improve the utilization ratio of frequency spectrum resources during a data reliable transmission process. In the following detailed embodiments, illustration is made with an example, in which the first retransmission request process is an ARQ process and the second retransmission request process is an HARQ process, and when retransmission request processes which form the two-level or multi-level feedback mechanism is other mechanisms, a manner for implementing the sharing of the sending status information of the data at the sending end is similar, and is not repeated in detail herein.

FIG. 2 is a flow chart of a data transmission method according to a second embodiment of the present invention. In this embodiment, a hierarchical structure for encapsulation processing of the data includes, from the top to the bottom: an application layer/a TCP layer/an IP layer/a media accessing control (MAC) layer/ a physical layer; and a first retransmission request process is an ARQ process, a second retransmission request process is an HARQ process, the ARQ process locates at the MAC layer, and the HARQ process locates at the physical layer. As shown in FIG. 2, the data transmission method in this embodiment includes:

Step 21: For data to be sent, establish a mapping relation between an ARQ block (BLOCK) and an HARQ subburst (Subburst).

In the ARQ, data is packetized with the BLOCK as a granularity and in the HARQ data is packetized with the Subburst as a granularity. A service data unit (SDU) which is obtained after the data to be sent undergoes high-layer packetizing processing enters the MAC layer. At the MAC layer, packetizing and block processing is performed with a size of the BLOCK in the ARQ as a granularity, for example, the SDU, plus a MAC header and a CRC check bit, forms a PDU of the MAC layer. Each BLOCK in the PDU has a corresponding ARQ BSN number. The PDU that undergoes packetizing processing at the MAC layer enters the physical layer. At the physical layer, packetizing and subburst processing is performed on the PDU of the MAC layer with a size of the Subburst in the HARQ as a granularity, for example, each PDU undergoes cascade padding (Padding), and then, together with 16 CRC check bits, forms the Subburst in the HARQ. After processing like that, each PDU in the Subburst carriers the ARQ BSN number corresponding to its own BLOCK, which is equivalent to establishing the mapping relation between the ARQ BLOCK and the HARQ Subburst.

Step 22: Send the data to a terminal. The HARQ process initiatively updates, according to a BLOCK sending status of the data in the HARQ Subburst and according to the mapping relation, status bit information of a descriptor of the BLOCK in the ARQ process. The status bit information is used for indicating the sending status about the BLOCK in the HARQ process.

In order to indicate the sending status of the BLOCK in the HARQ, optionally, a status bit is added in the ARQ BLOCK descriptor to indicate three statuses of the BLOCK in the HARQ: a first status, a second status or a third status. Optionally, the three statuses may be indicated by using three different status bits, such as status bits "01", status bits "10" and status bits "11". Status information corresponding to the status bits "01" is "being processed in HARQ". Status information corresponding to the status bits "10" is "successful sent in HARQ" and used for indicating that the sending or the retransmission is successful in the HARQ. Status information corresponding to the status bits "11" is "give up the sending in HARQ " and used for indicating that in the HARQ, the maximum member of retransmission times is reached and the retransmission of the data is given up, or that an abnormality occurs and the retransmission of the data is given up. Information of status bits and their meanings are as shown in Table 1.

**Table 1**

| Status bit | Status bit information | Meaning indicated |
|---|---|---|
| 01 | Being processed in HARQ | Default value |
| 10 | Successfully sent in HARQ | the sending or the retransmission is successful in HARQ |
| 11 | give up the sending in HARQ | In HARQ, the maximum number of retransmission times is reached and the retransmission of the data is given up or an abnormality occurs and the retransmission of the data is given up |

Although the sending status information of the ARQ BLOCK exists in the BLOCK descriptor of the ARQ process, the update of its status bits may be completed in the HARQ process. The default value of the status bits is "01", and optionally, in the HARQ, the sending status information of the data in the ARQ process may be updated at the following occasions.

(1) When the mapping relation is updated in the HARQ process, for example, after reconstruction of the MAC PDU is completed in the HARQ process, in the HARQ process, a status descriptor of a corresponding BLOCK may be located according to an ARQ BLOCK BSN number corresponding to the HARQ Subburst, and the status bits "01" are written into the status descriptor of the BLOCK and used for indicating that the sending status information of the data in the HARQ process is "being processed in HARQ".

(2) When the data is successfully retransmitted in the HARQ process, in the HARQ process the status descriptor of the corresponding BLOCK may be located according to the ARQ BLOCK BSN number corresponding to the HARQ Subburst, and the status bits "10" are written into the status descriptor of the BLOCK and used for indicating that the sending status information of the data in the HARQ process is "successfully sent in HARQ".

(3) When the data is retransmitted for the maximum times and the retransmission of the data is given up in the HARQ process, in the HARQ process, the status descriptor of the corresponding BLOCK may be located according to the ARQ BLOCK BSN number corresponding to the HARQ Subburst, and the status bits "11" are written into the status descriptor of the BLOCK and used for indicating that the sending status information of the data in the HARQ process is "give up the sending in HARQ ".

(4) When in the HARQ process, an abnormality occurs in the sending of the data and the data retransmission is given up, in the HARQ process, the status descriptor of the corresponding BLOCK may be located according to the ARQ BLOCK BSN number corresponding to the HARQ Subburst, and the status bits "11" are written into the status descriptor of the BLOCK and used for indicating that the sending status information of the data in the HARQ process is "give up the sending in HARQ ".

Persons skilled in the art can understand that the situations described in (3) and (4) may also be indicated separately by two types of status information.

Step 23: In the ARQ process, determine, according to the status bit information in the BLOCK descriptor, whether to retransmit the data to the terminal in the ARQ process.

Whether the BLOCK needs to be retransmitted to the terminal in the ARQ process is determined according to the status bit information in the BLOCK descriptor in the ARQ process. If the status bit information in the BLOCK descriptor in the ARQ process is the first status or the second status, no matter whether an ARQ NACK message fed back by the terminal is received in the ARQ process, the data is not retransmitted to the terminal. If the status bit information in the BLOCK descriptor in the ARQ process is the third status, in this case, no matter whether the ARQ NACK message is received in the ARQ, an operation of retransmitting the data to the terminal is immediately triggered.

Optionally, when a NACK message of a certain BLOCK is received in the ARQ, where the NACK message is fed back by the terminal, it is required to determine, according to the status bit information of the BLOCK, whether the BLOCK needs to be retransmitted to the terminal. The status bit information in the BLOCK descriptor and the retransmission processing that is performed in the ARQ when the NACK message of the BLOCK fed back by the terminal is received in the ARQ are as shown in Table 2.

**Table 2**

| Status bit | Status bit information | Processing when an NACK message of a BLOCK is received in ARQ |
|---|---|---|
| 01 | Being processed in HARQ | Do not retransmit |
| 10 | Successfully sent in HARQ | Do not retransmit (including a case that a fault or packet loss may occurs between the HARQ and the HARQ, such as simulated packet loss of the HARQ, and retransmission still is not performed in the ARQ, and retransmission may be performed relying on a timeout mechanism) |
| 11 | give up the sending in HARQ | Retransmit (including cases that the HARQ fails to retransmit successfully when reaching maximum retransmission times, or that an abnormality occurs so the retransmission is given up) |

In the data transmission method in this embodiment, the HARQ process writes the status of sending the BLOCK in the HARQ into the status bit of the status descriptor of the BLOCK in the ARQ process according to the mapping relation between the HARQ Subburst and the ARQ BLOCK, the sharing of the sending status information of the same BLOCK between the ARQ process and the HARQ process is implemented at the sending end, and in the ARQ process located at the higher layer, a retransmission mechanism needs to be determined according to the sending status about the BLOCK in the HARQ process located at the lower layer, which thereby reduces the dependence on feedback of the NACK information during a process of determining the retransmission mechanism in the ARQ process, reduces the occurrence probabilities of untimely ARQ retransmission and inaccurate retransmission that are caused by a delay in feedback of the ARQ NACK information and rough details of lost data, and avoids the resource waste caused by parallel retransmission in a two-level retransmission request process, so as to improve the utilization ratio of frequency spectrum resources during a reliable data transmission process.

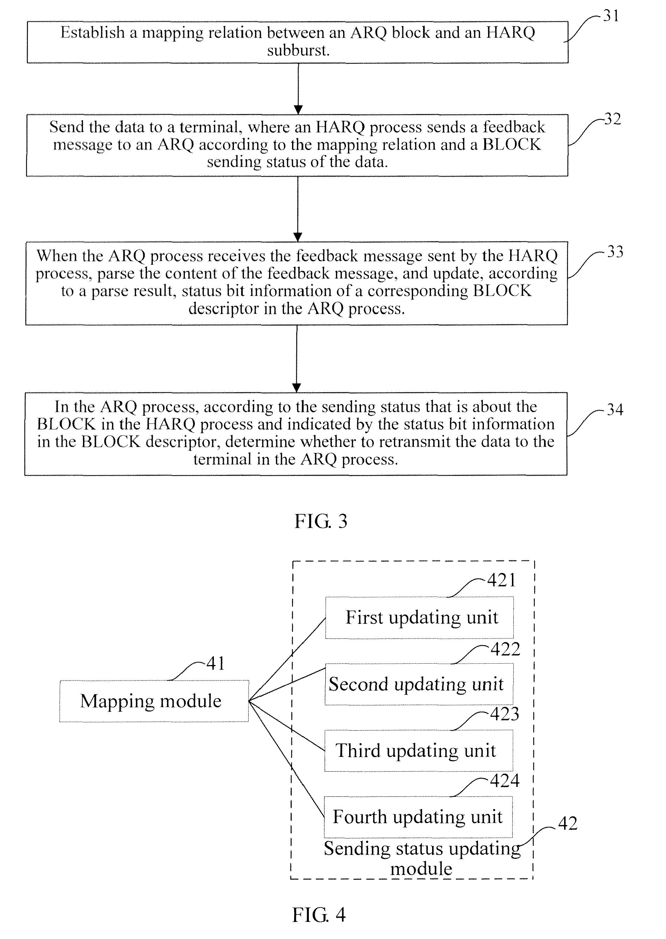

FIG. 3 is a flow chart of a data transmission method according to a third embodiment of the present invention. A difference between this embodiment and the embodiment corresponding to FIG. 2 lies that in the embodiment, a manner in which the HARQ process feeds back BLOCK sending status information to an ARQ process is different. In this embodiment, in the HARQ process, the feedback is performed in a manner of constructing a feedback message of the ARQ. As shown in FIG. 3, this embodiment includes:

Step 31: For data to be sent, establish a mapping relation between an ARQ BLOCK and an HARQ Subburst.

This step is similar to step 21, which is not repeated in detail herein.

Step 32: Send the data to a terminal, wherein the HARQ process sends a feedback message to the ARQ according to a BLOCK sending status of the data in the HARQ Subburst and according to the mapping relation.

Originally included feedback messages of the ARQ process include: an ACK (acknowledgement) message and an NACK (non-acknowledgement) message. If the terminal receives the data successfully, the terminal feeds back the ACK message to the ARQ process; and if the terminal receives the data incorrectly or loses the data, the terminal feeds back the NACK message to the ARQ process, for requesting the ARQ to retransmit the data.

In this step, a feedback message of the ARQ is constructed in the HARQ according to a status of sending a Subburst in the HARQ and a BLOCK BSN number corresponding to the Subburst. The format of the feedback message sent from the HARQ process to the ARQ process is the same as that of an original feedback message (such as the ACK message or the NACK message) of the ARQ process. Optionally, a flag bit may also be added on the basis of the format of the original feedback message, where the flag bit is used for indicating that the feedback message comes from the HARQ process. Further, optionally, the feedback message of the HARQ process may use two statuses "0" or "1", to notify the ARQ process that the sending of the BLOCK in the HARQ process is "failed" or "successful".

Step 33: When the ARQ process receives the feedback message sent by the HARQ process, parse content of the feedback message, and update, according to a parse result, status bit information of a corresponding BLOCK descriptor in the ARQ process, where the status bit information is used for indicating the sending status about the BLOCK in the HARQ process.

The status bit information of the BLOCK descriptor is shown in Table 1 above. When the ARQ process receives the feedback message from the HARQ process, the content of the feedback message is parsed. For example, if a value of a newly added flag bit in the feedback message is "1 ", it is indicated that the BLOCK is successfully sent in the HARQ process, and in the ARQ process, status bits of the BLOCK are set to a second status such as "successfully sent in HARQ". If the value of the newly added flag bit in the feedback message is "0", it is indicated that in the HARQ process, the BLOCK fails to be sent, and in the ARQ process, the status bits of the BLOCK are set to a second status such as "HARQ gives up the retransmission".

Step 34: In the ARQ process, determine, according to the status bit information in the BLOCK descriptor, whether to retransmit the data to the terminal in the ARQ process.

This step is similar to step 23, which is not repeated in detail herein.

In the data transmission method in this embodiment, the HARQ process constructs, according to the mapping relation between the HARQ Subburst and the ARQ BLOCK, the status of sending the BLOCK in the HARQ into the feedback message of the ARQ, and sends the feedback message to the ARQ process. A status bit of the status descriptor of the corresponding BLOCK is updated in the ARQ process according to the feedback message of the HARQ, so that the sharing of the sending status information of the same BLOCK between the HARQ process and the HARQ process is implemented at the sending end. In the HARQ process located at the higher layer, a retransmission mechanism needs to be determined according to the sending status about the BLOCK in the HARQ process located at the lower layer, which reduces the dependence on feedback of the NACK information during a process of determining the retransmission mechanism in the ARQ, reduces the occurrence probabilities of untimely ARQ retransmission and inaccurate retransmission that are caused by a delay in feedback of the ARQ NACK information and lost data details, and avoids the resource waste caused by parallel retransmission in a two-level retransmission request process, so as to improve the utilization ratio of frequency spectrum resources during a reliable data transmission process.

FIG. 4 is a schematic structural diagram of a network side device according to a fourth embodiment of the present invention. As shown in FIG. 4, the network side device according to the embodiment includes: a mapping module 41 and a sending status updating module 42.

The mapping module 41 is configured to establish a mapping relation between a first identifier of data required to be sent in a first retransmission request process and a second identifier of the data in a second retransmission request process, where the first retransmission request process and the second retransmission request process are located at different layers for performing transmission processing on the data, and a layer where the first retransmission request process is located is higher than a layer where the second retransmission request process is located.

The sending status updating module 42 is configured to send the data. The second retransmission request process updates, according to the mapping relation and a sending status of the data, sending status information of the data in the first retransmission request process, so that in the first retransmission request process, whether to retransmit the data is determined according to the sending status information of the data.

Based on the foregoing technical solution, optionally, the sending status information of the data includes a first status, a second status or a third status. The first status indicates that the data is being processed in a HARQ process; the second status indicates that the data is successfully retransmitted in the HARQ process; and the third status indicates that in the HARQ process, the maximum number of retransmission times is reached and the data retransmission is given up, or that an abnormality occurs and the data retransmission is given up.

Based on the foregoing technical solutions, optionally, the first retransmission request process is an ARQ process and the second retransmission request process is the HARQ process. The sending status updating module 42 may include at least one of the following units: a first updating unit 421, a second updating unit 422, a third updating unit 423, and a fourth updating unit 424.

The first updating unit 421 is configured to, when the mapping relation is updated in the second retransmission request process, update the sending status information of the data in the second retransmission request process to the first status. Optionally, the first updating unit 421 may be specifically configured to update the sending status information of the data in the ARQ process, when the mapping relation is updated in the HARQ process.

The second updating unit 422 is configured to, when the data is successfully retransmitted in the second retransmission request process, update the sending status information of the data in the first retransmission request process to the second status. Optionally, the second updating unit 422 may be specifically configured to update the sending status information of the data in the ARQ process, when the data is successfully retransmitted in the HARQ process.

The third updating unit 423 is configured to, when the maximum number of data retransmission times is reached and the data retransmission is given up in the second retransmission request process, update the sending status information of the data in the first retransmission request process to the third status. Optionally, the third updating unit 423 may be specifically configured to update the sending status information of the data in the ARQ process, when the maximum number of data retransmission times is reached and the data retransmission is given up in the HARQ process.

The fourth updating unit 424 is configured to, when an abnormality occurs in sending of the data and the data retransmission is given up in the second retransmission request process, update the sending status information of the data in the first retransmission request process to the third status. Optionally, the fourth updating unit 424 may be specifically configured to update the sending status information of the data in the ARQ process, when an abnormality occurs in sending of the data and the data retransmission is given up in the HARQ process.

If the status information of sending the data in the ARQ process is the third status, the data is retransmitted to the terminal in the ARQ process.

If the status information of sending the data in the ARQ process is the first status or the second status, the data is not retransmitted to the terminal in the ARQ process.

When the network side device in this embodiment is used as a sending end, sharing of the sending status information of the same data between the first retransmission request process and the second retransmission request process is implemented, and in the first retransmission request process located at the higher layer, a retransmission mechanism needs to be determined according to the sending status of the data in the second retransmission request process located at the lower layer, which thereby reduces dependence on the feedback information during a process of determining the retransmission mechanism in the first retransmission request process, and avoids the resource waste caused by parallel retransmission in a two-level retransmission request process, so as to improve the utilization ratio of frequency spectrum resources during a data reliable transmission process. For an implementation mechanism of the network side device in this embodiment, reference may be made to the descriptions of embodiments corresponding to FIG. 1 to FIG. 3, and the details are not repeated herein.

Persons of ordinary skill in the art can understand that the accompanying drawing is only a schematic diagram of one embodiment, and modules or procedures in the accompanying drawing are not necessarily required for implementing the present invention.

Persons of ordinary skill in the art can understand that, modules in the device in the embodiment may be distributed in the device in the embodiment according to the description of the embodiment, or be correspondingly changed to be placed in one or more devices different from this embodiment. The modules in the foregoing embodiment may be combined into one module, or further divided into a plurality of sub-modules.

The sequence numbers in the foregoing embodiments of the present invention are merely used for description, and do not imply the preference among the embodiments.

Persons of ordinary skill in the art can understand that all or part of the steps in the foregoing method embodiments may be implemented by a program instructing relevant hardware. The program may be stored in a computer readable storage medium. When the program is run, the steps of the method according to the embodiments are performed. The storage medium includes various media that are capable of storing program codes, such as a ROM, a RAM, a magnetic disk or an optical disk.

Finally, it should be noted that the foregoing embodiments are merely provided for describing the technical solutions of the present invention, but not intended to limit the present invention. Although the present invention has been described in detail with reference to the embodiments, persons of ordinary skill in the art should understand that: they still can make modifications to the technical solutions described in the embodiments, or equivalent replacements to some technical features in the technical solutions; and such modifications or replacements do not make corresponding technical solutions depart from the spirit and scope of the present invention.

## Claims

1. A data transmission method, comprising:
establishing a mapping relation between a first identifier of data required to be sent in a first retransmission request process and a second identifier of the data in a second retransmission request process, wherein the first retransmission request process and the second retransmission request process are located at different layers for performing transmission processing on the data, and a layer where the first retransmission request process is located is higher than a layer where the second retransmission request process is located; and
sending the data, wherein the second retransmission request process updates, according to the mapping relation and a sending status of the data, sending status information of the data in the first retransmission request process, so that in the first retransmission request process, whether to retransmit the data is determined according to the sending status information of the data.

2. The data transmission method according to claim 1, wherein the first retransmission request process is an automatic repeat request process and the second retransmission request process is a hybrid automatic repeat request process.

3. The data transmission method according to claim 2, wherein
the sending status information of the data comprises a first status, a second status and a third status, wherein the first status indicates that the data is being processed in the hybrid automatic repeat request process, the second status indicates that the data is successfully retransmitted in the hybrid automatic repeat request process, and the third status indicates that in the hybrid automatic repeat request process, the maximum number of retransmission times is reached and the data retransmission is given up, or an abnormality occurs and the data retransmission is given up.

4. The data transmission method according to claim 3, wherein that the hybrid automatic repeat request process updates the sending status information of the data in the automatic repeat request process, comprises:
if the mapping relation is updated in the hybrid automatic repeat request process, updating the sending status information of the data in the automatic repeat request process to the first status; or
if the data is successfully retransmitted in the hybrid automatic repeat request process, updating the sending status information of the data in the automatic repeat request process to the second status; or
if the maximum number of data retransmission times is reached and the data retransmission is given up in the hybrid automatic repeat request process, updating the sending status information of the data in the automatic repeat request process to the third status; or
if an abnormality occurs in sending of the data and the data retransmission is given up in the hybrid automatic repeat request process, updating the sending status information of the data in the automatic repeat request process to the third status.

5. The data transmission method according to claim 3 or 4, wherein that in the first retransmission request process, whether to retransmit the data is determined according to the sending status information of the data, comprises:
if the status information of sending the data in the automatic repeat request process is the third status, determining, in the automatic repeat request process, that the data is retransmitted in the automatic repeat request process; and
if the status information of sending the data in the automatic repeat request process is the first status or the second status, determining, in the automatic repeat request process, that the data is retransmitted in the automatic repeat request process.

6. The data transmission method according to any one of claims 1 to 4, wherein that the second retransmission request process updates, according to the mapping relation and the sending status of the data, the sending status information of the data in the first retransmission request process, comprises:
obtaining, in the second retransmission request process, the sending status information which is of the data and indicated by the first identifier, and writing the sending status information into a status descriptor corresponding to the second identifier of the data.

7. The data transmission method according to claim 2, wherein
that the hybrid automatic repeat request process updates, according to the mapping relation and the sending status of the data, the sending status information of the data in the automatic repeat request process, comprises: sending, by the hybrid automatic repeat request process, feedback information to an automatic repeat request, wherein the feedback information is used for indicating that the sending status of the data in the hybrid automatic repeat request process is successful or failed.

8. The data transmission method according to claim 2, wherein
that in the automatic repeat request process, whether to retransmit the data in the automatic repeat request process is determined according to the sending status information of the data, comprises: when feedback information indicates that the sending status of sending the data in the hybrid automatic repeat request process is failed, retransmitting the data in the automatic repeat request process.

9. A network side device, comprising:
a mapping module, configured to establish a mapping relation between a first identifier of data required to be sent in a first retransmission request process and a second identifier of the data in a second retransmission request process, wherein the first retransmission request process and the second retransmission request process are located at different layers for performing transmission processing on the data, and a layer where the first retransmission request process is located is higher than a layer where the second retransmission request process is located; and
a sending status updating module, configured to send the data, wherein the second retransmission request process updates, according to the mapping relation and a sending status of the data, sending status information of the data in the first retransmission request process, so that in the first retransmission request process, whether to retransmit the data is determined according to the sending status information of the data.

10. The network side device according to claim 9, wherein the sending status information of the data comprises a first status, a second status, or a third status, wherein the first status indicates that the data is being processed in a hybrid automatic repeat request process, the second status indicates that the data is successfully retransmitted the hybrid automatic repeat request process, and the third status indicates that in the hybrid automatic repeat request process, the maximum number of retransmission times is reached and the data retransmission is given up, or an abnormality occurs and the data retransmission is given up; and
wherein the sending status updating module comprises at least one of the following units:
a first updating unit, configured to, when the mapping relation is updated in the second retransmission request process, update the sending status information of the data in the second retransmission request process to the first status;
a second updating unit, configured to, when the data is successfully retransmitted in the second retransmission request process, update the sending status information of the data in the first retransmission request process to the second status;
a third updating unit, configured to, when data is retransmitted for maximum times and the data retransmission is given up in the second retransmission request process, update the sending status information of the data in the first retransmission request process to the third status; and
a fourth updating unit, configured to, when an abnormality occurs in sending of the data and the data retransmission is given up in the second retransmission request process, update the sending status information of the data in the first retransmission request process to the third status.
